# EUROPÄISCHE PATENTSCHRIFT

(11) **EP 3 428 580 B1**
(45) Veröffentlichungstag und Bekanntmachung des Hinweises auf die Patenterteilung: **27.10.2021**
(21) Anmeldenummer: 18172396.6
(22) Anmeldetag: 15.05.2018
(51) Int. Cl.: G01C 23/00, G01C 21/16, B64G 1/36, G05D 1/10, F41G 7/36

(54) **INERTIALSENSORSYSTEM FÜR FLUGKÖRPER UND VERFAHREN ZUR FLUGPHASENABHÄNGIGEN INERTIALSENSORMESSUNG**
INERTIAL SENSOR SYSTEM FOR MISSILES AND A METHOD FOR FLIGHT PHASE DEPENDENT INERTIAL SENSOR MEASURING
SYSTÈME CAPTEUR INERTIEL POUR ENGIN BALISTIQUE ET PROCÉDÉ DE MESURE DE CAPTEUR INERTIEL EN FONCTION DE LA PHASE DE VOL

(30) Priorität: 12.07.2017 DE 102017006611
(43) Veröffentlichungstag der Anmeldung: 16.01.2019
(73) Patentinhaber: MBDA Deutschland GmbH, 86529 Schrobenhausen (DE)
(72) Erfinder: NEWZELLA, Alfons, 82239 Alling (DE); SCHODER, Johannes, 86676 Ehekirchen (DE)
(74) Vertreter: Isarpatent

(56) Entgegenhaltungen:
- EP-A1- 2 581 748
- US-A- 4 914 598
- US-A1- 2009 326 851
- US-B1- 7 171 303

## Beschreibung

### TECHNISCHES GEBIET DER ERFINDUNG

Die Erfindung betrifft ein Inertialsensorsystem für Flugkörper, einen Flugkörper mit einem derartigen Inertialsensorsystem sowie ein Verfahren zur flugphasenabhängigen Inertialsensormessung während des Fluges eines Flugkörpers.

### TECHNISCHER HINTERGRUND

Leichte Flugkörper wie etwa Lenkflugkörper oder Lenkgranaten, werden oft mit einem inertialen Navigations- oder Regelsystem (Trägheitsnavigationssystem) ausgestattet. Aufgrund der erhöhten Fehleranfälligkeit inertialer Navigationssysteme werden in derartigen leichten Flugkörpern häufig weitere bzw. zusätzliche Sensoren integriert, deren Signale weitere Informationen zur Lage des Flugkörpers liefern und zur Fehlererkennung bzw. gegebenenfalls Fehlerkorrektur von Ausgabewerten des inertialen Navigationssystems dienen. Um die Steuerung von leichten Flugkörpern zu optimieren, können alle Sensorsignale durch Kalman-Filter plausibilisiert werden, die als weitere Basisgrößen dynamische Messdaten wie etwa Altimeterdaten, Daten eines globalen Navigationssatellitensystems oder Messdaten eines Magnetometers verwenden können.

Häufig treten dabei gegensätzliche Anforderungen auf, da für leichte Flugkörper einerseits qualitativ hochwertige Steuerfunktionen in einer hinreichenden Sicherheitsanforderungsstufe gemäß IEC 61508/IEC61511 mit ausreichendem Messbereich, guter Fehlertoleranz und hoher Bandbreite wünschenswert sind, die dafür zu nutzenden Inertialsensoriksysteme allerdings auf der anderen Seite auch kosteneffizient sein sollen.

In der Druckschrift DE 10 2011 115 971 A1 beispielsweise wird ein Verfahren zur Bestimmung von inertialen Messgrößen mittels einer Inertialsensoren aufweisenden inertialen Messeinheit vorgeschlagen, bei dem mindestens zwei Inertialsensoren unterschiedlicher Erfassungsgenauigkeit jeweils die gleiche Messgröße unabhängig voneinander in nur teilweise disjunkten Messgrößenwertebereichen erfassen und die erfassten Messgrößenwerte zur Bildung eines fehlerbereinigten Messsignals zusammenzufassen.

Die Druckschrift EP 2 352 968 A1 offenbart eine Inertialmesseinheit mit Sensorclustern aus jeweils mehreren kostengünstigen MEMS-Inertialsensoren geringer Messgenauigkeit.

EP 2 581 748 A1 offenbart ein Verfahren zur Bestimmung von Inertialmesswerten eines Flugkörpers, wobei zwei Inertialsensoren die gleiche physikalische Größe unabhängig voneinander messen.

US 4 914 598 A offenbart ein integriertes, redundantes Referenzsystem für die Flugregelung und zur Erzeugung von Kurs- und Lageinformationen, wobei die Bestimmung des Kurses, der Geschwindigkeit und der Höhe auf einer Messung derselben physikalischen Größe durch mehrere unabhängige Sensoren basiert.

US 7 171 303 B1 offenbart ein Navigationsgerät mit einem Sensorsystem, wobei das Sensorsystem mindestens zwei Inertialmesseinheiten beinhaltet, für welche Fehler u.a. der Drift kompensiert werden.

### ZUSAMMENFASSUNG DER ERFINDUNG

Eine der Aufgaben der Erfindung besteht darin, Lösungen für genaue und langzeitstabile Inertialsensorsysteme zum Einsatz in Flugkörpern zu finden, die einfach und kostengünstig zu implementieren sind.

Diese und andere Aufgaben werden durch ein Inertialsensorsystem mit den Merkmalen des Anspruchs 1, einen Flugkörper mit den Merkmalen des Anspruchs 7, sowie ein Verfahren zur flugphasenabhängigen Inertialsensormessung bei einem Flugkörper mit den Merkmalen des Anspruchs 8 gelöst.

Eine wesentliche Idee der Erfindung besteht darin, für einige oder alle Sensorarten eines Inertialsensorsystems zwei oder mehr redundante Sensoren vorzuhalten, die unterschiedliche Messeigenschaften aufweisen, wie etwa unterschiedliche Bandbreiten, unterschiedliche Vibrationsfestigkeiten, unterschiedliche Beschleunigungsfestigkeit, unterschiedliche Messgenauigkeiten, unterschiedliche Temperaturabhängigkeiten, unterschiedliche Skalenfaktorfehlerwerte, unterschiedliche Langzeitstabilitätswerte, unterschiedliche Driftwerte ("bias") oder dergleichen. Durch das Vorhalten mehrerer Sensoren pro Sensortyp kann eine zentrale Steuereinrichtung des Inertialsensorsystems je nach Flugphase einen Satz an Sensoren als den jeweils temporär optimalen auswählen und die Messwerte der Sensoren dieses ausgewählten Satzes als Basis für die Messung heranziehen. Dies ermöglicht es, auf die jeweiligen Anforderungsprofile der unterschiedlichen Flugphasen zu reagieren, bei denen die jeweiligen Sensoreigenschaften zur Verlässlichkeit der gesamten Messung in unterschiedlichem Maße beitragen.

Ein besonderer Vorteil in der erfindungsgemäßen Lösungen besteht darin, dass die Kosten und das benötigte Bauvolumen derartiger Inertialsensorsysteme signifikant gesenkt werden können, da die verwendeten Sensoren jeweils nur bezüglich einer geringeren Auswahl an Sensoreigenschaften optimiert werden müssen. Auf große, schwere und teure Sensoren, die alle gegenläufigen Anforderungen wie etwa einen weiten Messbereich bei hoher Messgenauigkeit gleichzeitig erfüllen müssen, kann daher vorteilhafterweise verzichtet werden.

Vorteilhafte Ausgestaltungen und Weiterbildungen ergeben sich aus den weiteren Unteransprüchen sowie aus der Beschreibung unter Bezugnahme auf die Figuren. Gemäß einigen Ausführungsformen des erfindungsgemäßen Inertialsensorsystems umfasst das Inertialsensorsystem einen mit dem Steuerprozessor gekoppelten Speicher, in welchem Konfigurationsdatensätze zur Fehlerkompensation jedes der ersten und zweiten Inertialsensoren gespeichert sind. Dabei kann der Steuerprozessor in einigen Ausführungsformen weiterhin dazu ausgelegt sein, einen Inertialsensor der ersten Inertialsensoren und einen Inertialsensor der zweiten Inertialsensoren in Abhängigkeit von den in dem Speicher gespeicherten Konfigurationsdatensätzen auszuwählen.

Gemäß eines Aspekts des erfindungsgemäßen Inertialsensorsystems ist der Steuerprozessordazu ausgelegt, einen Inertialsensor der ersten Inertialsensoren und einen Inertialsensor der zweiten Inertialsensoren in Abhängigkeit von einer momentanen Flugphase des Flugkörpers auszuwählen. Dabei kann es in einigen Ausführungsformen möglich sein, dass der Steuerprozessor die momentane Flugphase des Flugkörpers auf der Basis von momentanen Sensormesswerten mindestens eines Inertialsensors der ersten und zweiten Inertialsensoren bestimmt.

Gemäß einigen weiteren Ausführungsformen des erfindungsgemäßen Verfahrens umfasst das Verarbeiten der Sensormesswerte ein Berechnen der momentanen Fluglage des Flugkörpers auf der Basis von Beschleunigungssensormesswerten und Drehratensensormesswerten.

Gemäß einigen weiteren Ausführungsformen des erfindungsgemäßen Verfahrens umfasst das Verfahren weiterhin den Schritt des Kompensierens der Fehlerparameter der zwei aktiven Inertialsensoren in Abhängigkeit von in einem mit dem Steuerprozessor gekoppelten Speicher gespeicherten Konfigurationsdatensätzen für jeden der ersten und zweiten Inertialsensoren.

Gemäß einigen weiteren Ausführungsformen des erfindungsgemäßen Verfahrens umfasst das Verfahren weiterhin die Schritte des Bestimmens, durch den Steuerprozessor, ob der Flugkörper in eine nächste Flugphase eintritt, des Auswählens eines neuen ersten aktiven Inertialsensors von mindestens zwei ersten Inertialsensoren eines ersten Inertialsensortyps in Abhängigkeit von der nächsten Flugphase, des Auswählens eines neuen zweiten aktiven Inertialsensors von mindestens zwei zweiten Inertialsensoren eines zweiten, von den erstem Inertialsensortyp verschiedenen Inertialsensortyps in Abhängigkeit von der nächsten Flugphase, und des Verarbeitens der Sensormesswerte der zwei neuen aktiven Inertialsensoren in dem Steuerprozessor.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine beispielhafte Illustration eines Inertialsensorsystems gemäß einer Ausführungsform der Erfindung;
Fig. 2 eine beispielhafte Illustration eines Inertialsensorsystems gemäß einer weiteren Ausführungsform der Erfindung;
Fig. 3 ein schematisches Blockschaubild eines Inertialsensorsystems gemäß einer weiteren Ausführungsform der Erfindung;
Fig. 4 ein schematisches Blockschaubild eines Inertialsensorsystems gemäß einer weiteren Ausführungsform der Erfindung;
Fig. 5 eine beispielhafte Illustration eines Flugkörpers mit einem Inertialsensorsystem gemäß einer weiteren Ausführungsform der Erfindung;
Fig. 6 eine beispielhafte Illustration eines Flugkörpers mit einem Inertialsensorsystem gemäß einer weiteren Ausführungsform der Erfindung;
Fig. 7 ein Flussdiagramm eines Verfahrens zur flugphasenabhängigen Inertialsensormessung bei einem Flugkörper gemäß einer weiteren Ausführungsform der Erfindung; und
Fig. 8 ein Flussdiagramm, welches beispielhafte Details des Verfahrens der Fig. 7 darstellt.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Flugkörper im Sinne der vorliegenden Erfindung umfassen alle ballistischen bzw. ungelenkten Flugkörper und Lenkflugkörper, die sich auf bestimmbaren Flugbahnen in und außerhalb des Luftraums bewegen können. Flugkörper im Sinne der vorliegenden Erfindung umfassen dabei insbesondere leichte Drohnen, Lenkraketen, Lenkgranaten, alle Arten von Marschflugkörpern, Bodenzielflugkörpern, Luft-Boden-Raketen, Panzerabwehrlenkwaffen, Seezielflugkörpern, Luftzielflugkörpern wie Luft-Luft-Raketen oder Flugabwehrraketen, Anti-Raketen-Raketen und Antisatellitenraketen.

Eine inertiale Messeinheit ("inertial measurement unit", IMU) im Sinne der vorliegenden Erfindung ist eine räumliche Kombination mehrerer Inertialsensoren wie Beschleunigungssensoren, Drehratensensoren und ähnlicher. IMUs sind sensorische Messapparaturen von Trägheitsnavigationssystemen ("inertial navigation system", INS), welche unter anderem bei Flugkörpern zur Flugnavigation und zur regelungstechnischen Stabilisierung des Flugkörpers im Raum eingesetzt werden. Zur Erfassung von sechs möglichen kinematischen Freiheitsgraden verfügt eine IMU üblicherweise mindestens über drei jeweils zueinander orthogonal eingebaute Beschleunigungssensoren (Translationssensoren) für die Erfassung der translatorischen Bewegung in x-, y- und z-Richtung sowie mindestens drei orthogonal zueinander angebrachte Drehratensensoren (gyroskopische Sensoren) für die Erfassung rotierender bzw. kreiselnder Bewegungen um die x-, y- und z-Achse. IMUs können daher als Messwerte mindestens drei lineare Beschleunigungswerte für die translatorische Bewegung und mindestens drei Winkelgeschwindigkeitswerte für die Drehraten liefern. In einem INS kann aus den linearen Beschleunigungswerten, gegebenenfalls nach Kompensation der Erdbeschleunigung, die lineare Geschwindigkeit entlang der Flugbahn und die Position im Raum bezogen auf einen Referenzpunkt ermittelt werden. Die Integration der drei Winkelgeschwindigkeitswerte liefert, bezogen auf einen Referenzpunkt, die Orientierung im Raum.

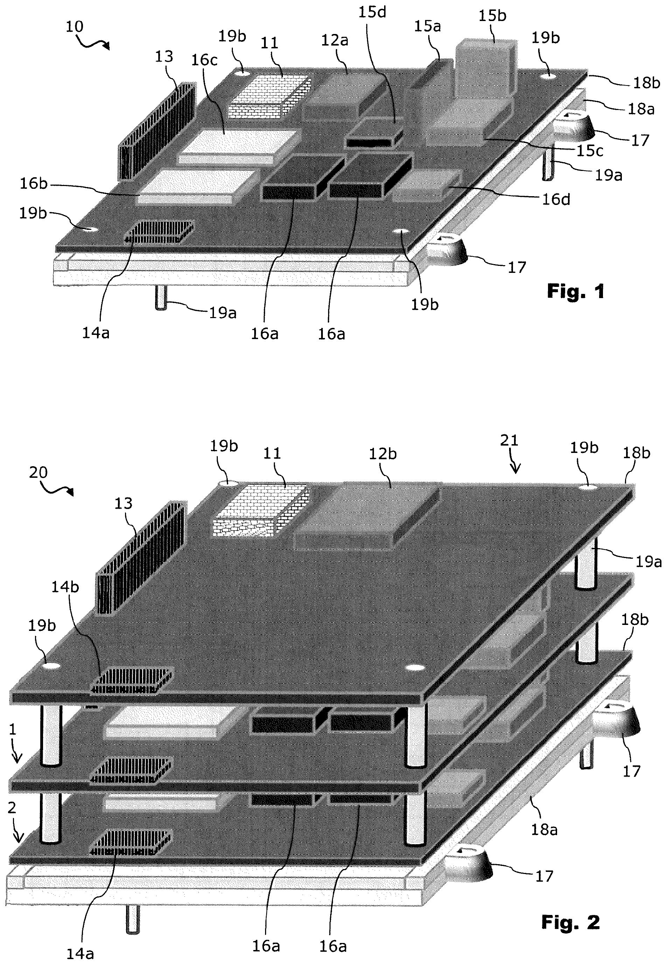

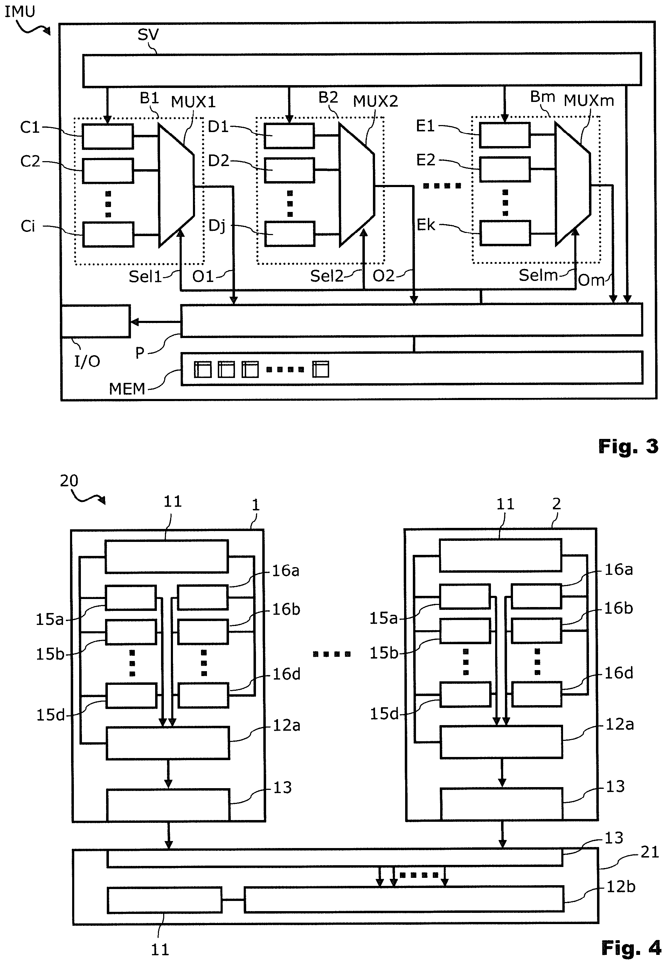

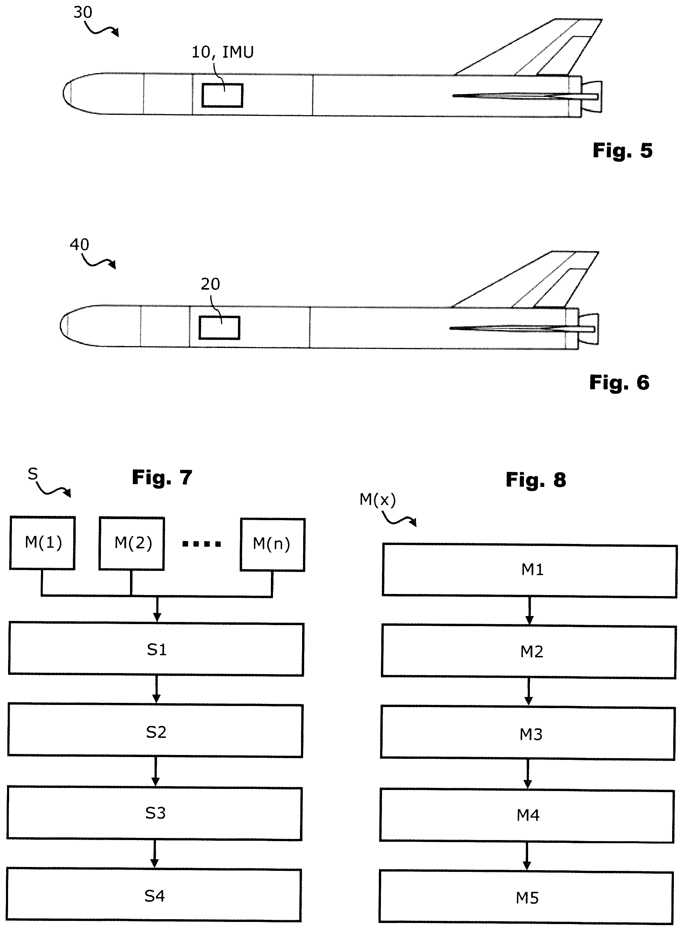

Fig. 1 zeigt eine beispielhafte Illustration eines Inertialsensorsystems 10. Die in Fig. 1 dargestellten Komponenten des Inertialsensorsystems 10 sind nur beispielhafter Natur und weitere Komponenten können im Zusammenhang mit dem Inertialsensorsystem 10 implementiert werden. Beispielsweise kann es möglich sein, dass für das Inertialsensorsystem 10 eine ähnliche oder analoge Funktionsweise wie im Zusammenhang mit dem in Fig. 3 in Blockschaubildweise gezeigten und weiter unten funktional erläuterten Inertialsensorsystem IMU implementiert wird. Das Inertialsensorsystem 10 kann beispielsweise Teil eines Trägheitsnavigationssystems (INS) sein, welches zum Beispiel für den Einsatz in einem Flugkörper konzipiert ist. Ein derartiger Flugkörper 30, welcher ein Inertialsensorsystem 10 (oder Inertialsensorsystem IMU) aufweisen kann, ist beispielhaft in Fig. 5 dargestellt. Dabei kann das Inertialsensorsystem 10 insbesondere als Strapdown-Inertialsensorsystem ausgebildet werden, das heißt, ein IMU, bei dem die Inertialsensoren des Inertialsensorsystems 10 fest mit dem äußeren Rahmen des Flugkörpers 30 verbunden sind. Insbesondere die Beschleunigungssensoren solcher Strapdown-Inertialsensorsysteme weisen dabei auch einen der Rotationsbewegung des Flugkörpers 30 zuzuschreibenden Sensormesswertanteil auf, welcher zur Bestimmung der translatorischen Beschleunigungswerte mithilfe von Sensorsignalwerte der Drehratensensoren kompensiert werden kann.

Das Inertialsensorsystem 10 umfasst eine Trägerplattform 18a, auf der eine Schaltplatine 18b aufgebracht ist. Die Trägerplattform 18a dient zur mechanischen Stabilisierung der Komponenten auf der Schaltplatine 18b und kann einerseits seitlich angeordnete Befestigungslaschen 17 zur Befestigung des Inertialsensorsystem 10 an einem Rahmen eines Flugkörpers, und andererseits Montagestifte 19a auf der Unterseite der Trägerplattform 18a aufweisen. Die Montagestifte 19a können dazu eingesetzt werden, mehrere Inertialsensorsysteme 10 übereinander zu stapeln, indem die Montagestifte 19a in deckungsgleich angeordneten Montageöffnungen 19b in der Schaltplatine 18b eines weiteren Inertialsensorsystems 10 eingesteckt werden. Die Montagestifte 19a dienen dabei einerseits der mechanisch stabilen Verbindung und andererseits als Abstandhalter zwischen den beiden gestapelten Inertialsensorsystemen 10. Die Anzahl der Montagestifte 19a und/oder Montageöffnungen 19b kann dabei variieren, auch wenn in Fig. 1 beispielhaft vier Montageöffnungen 19b dargestellt sind. Ebenso ist die Positionierung der Montageöffnungen 19b und der Montagestifte 19a in Bezug auf den Grundriss des im Wesentlichen planar ausgebildeten Inertialsensorsystems 10 nicht auf die in Fig. 1 beispielhaft dargestellte Positionierung in den Außenecken beschränkt. Ferner kann es möglich sein, andere Grundrissformen als die kreisrunde in Fig. 1 beispielhaft dargestellte Form für die Montageöffnungen 19b und die Montagestifte 19a zu wählen, beispielsweise polygonale Grundriss- bzw. Querschnittsformen.

Das Inertialsensorsystem 10 weist einen zentralen Steuerprozessor 12a auf, der über einen Energieversorgungsbaustein 11 mit elektrischer Energie versorgt wird. Der zentrale Steuerprozessor 12a kann beispielsweise ein ASIC, ein FPGA, ein PLD, ein digitaler Signalprozessor, ein Mikrocontroller oder eine andere geeignete portable Recheneinrichtung sein, die in der Lage ist, eingehende Sensorsignale zu verarbeiten und verarbeitete Sensorsignale in Ausgabewerte zu verwandeln, die an Eingabe-/Ausgabeschnittstellen 14a des Inertialsensorsystems 10 ausgegeben werden können. Das Inertialsensorsystem 10 kann neben den Eingabe-/Ausgabeschnittstellen 14a auch über systemverbindende Systemschnittstellen 13 verfügen, über die mehrere übereinander gestapelte Inertialsensorsysteme 10 bzw. deren Steuerprozessoren 12a miteinander kommunizieren und Daten austauschen können. Der zentrale Steuerprozessor 12a kann überdies über einen internen Speicher verfügen. Es kann auch möglich sein, dass ein separater (in Fig. 1 nicht explizit gezeigter) Speicherbaustein auf der Platine 18b vorgesehen wird, der mit dem zentralen Steuerprozessor 12a gekoppelt ist, und von dem der zentrale Steuerprozessor 12a gespeicherte Daten zur Verarbeitung abrufen kann.

Das Inertialsensorsystem 10 verfügt eine Anzahl von Inertialsensoren verschiedener Inertialsensortypen. Ein Inertialsensortyp ist dabei eine auf die Messung eines bestimmten Inertialsensorparameters ausgelegte Gruppe von Sensoren wie beispielsweise lineare Beschleunigungssensoren, Rotationsbeschleunigungssensoren, Drehratensensoren, gyroskopische Sensoren und ähnliche Sensortypen. Die physikalische Ausgestaltung eines Inertialsensors ist für die Zuordnung zu einem Inertialsensortyp unerheblich, wenn der fragliche Inertialsensor die gemäß dem Inertialsensortyp vorgegebenen Messwerte für den bestimmten Inertialsensorparameter ausgeben kann. Inertialsensoren innerhalb einer einem Inertialsensortyp zugeordnete Gruppe von Sensoren unterscheiden sich hinsichtlich ihrer Messeigenschaften. Beispielsweise können Inertialsensoren des selben Inertialsensortyps unterschiedliche Bandbreiten, unterschiedliche Vibrationsfestigkeiten, unterschiedliche Beschleunigungsfestigkeit, unterschiedliche Messgenauigkeiten, unterschiedliche Temperaturabhängigkeiten, unterschiedliche Driftwerte ("bias"), unterschiedliche Langzeitstabilitätswerte oder unterschiedliche Skalenfaktorfehlerwerte aufweisen. Die Messeigenschaften der Inertialsensoren können über Kalibrationsprozeduren, beispielsweise unter Zuhilfenahme von Drehtischen, Zentrifugen oder Temperaturkammern, in Abhängigkeit von den Stimulationsparametern ermittelt werden und als Fehlerparameter gespeichert werden. Zu den jeweils ermittelten Messeigenschaften können Kompensationsparameter für die Ansteuerung der Inertialsensoren berechnet werden, mit denen die Ausgabewerte der jeweiligen Inertialsensoren vor einer Weiterverarbeitung in einem Steuerprozessor kompensiert werden können. Die Kompensationsparameter können für jeden verwendeten Inertialsensor in einem Konfigurationsdatensatz in einem Speicher des Inertialsensorsystems 10 gespeichert werden.

Das Inertialsensorsystem 10 kann beispielsweise drei raumachsgebundene gyroskopische Sensoren bzw. Drehratensensoren 15a, 15b, 15c aufweisen, die jeweils orthogonal zueinander fest auf der Platine 18b angeordnet sind. Das Inertialsensorsystem 10 kann beispielsweise zusätzlich einen dreidimensionalen gyroskopischen Sensor 15d aufweisen. Das Inertialsensorsystem 10 kann beispielsweise drei raumachsgebundene lineare Beschleunigungssensoren 16a, 16b, 16c aufweisen, die jeweils orthogonal zueinander fest auf der Platine 18b angeordnet sind. In manchen Fällen können für ein oder mehrere der linearen Beschleunigungssensoren 16a, 16b, 16c redundante Beschleunigungssensoren mit der gleichen Orientierung eingesetzt werden, wie in Fig. 1 beispielhaft für den linearen Beschleunigungssensor 16a gezeigt. Ferner kann das Inertialsensorsystem 10 beispielsweise zusätzlich einen dreidimensionalen linearen Beschleunigungssensor 16d aufweisen. Es sollte klar sein, dass Anzahl, Orientierung, relative Positionierung auf der Platine 18b und Dimensionierung der gezeigten Inertialsensoren 15a, 15b, 15c, 15d, 16a, 16b, 16c und 16d in Fig. 1 nur beispielhafter Natur sind und dass eine Vielzahl von anderen Implementierungsmöglichkeiten ebenso verwirklicht werden kann.

Fig. 2 zeigt einen Stapel aus zwei Inertialsensorsystemen 10 und einem systemübergreifenden Steuersystem 21, welches als oberste Stapelebene in Fig. 2 implementiert ist. Zusammen bilden die zwei Inertialsensorsysteme 10 und das Steuersystem 21 ein Inertialsensorsystem 20, welches die zwei Inertialsensorsysteme 10 als redundante Sensorsysteme zur Fehlererkennung und gegebenenfalls Fehlerkorrektur einsetzt. Es sollte klar sein, dass mehr als zwei Inertialsensorsysteme 10 in dem Inertialsensorsystem 20 eingesetzt werden können und dass die Platzierung des systemübergreifenden Steuersystem 21 in dem Stapel nicht notwendigerweise auf die oberste Ebene (wie in Fig. 2 beispielhaft gezeigt) begrenzt ist.

Das systemübergreifende Steuersystem 21 weist neben einem Energieversorgungsbaustein 11 einen zentralen Systemprozessor 12b auf, welcher über den Energieversorgungsbaustein 11 mit elektrischer Energie versorgt wird. Der zentrale Steuerprozessor 12b kann beispielsweise ein ASIC, ein FPGA, ein PLD, ein digitaler Signalprozessor, ein Mikrocontroller oder eine andere geeignete portable Recheneinrichtung sein, die in der Lage ist, eingehende Sensorsignale zu verarbeiten und verarbeitete Sensorsignale in Ausgabewerte zu verwandeln, die an Eingabe-/Ausgabeschnittstellen 14b ausgegeben werden können. Die Steuerprozessoren 12a und 12b des Inertialsensorsystems 20 sind über die systemverbindenden Systemschnittstellen 13 verbunden, über die die übereinander gestapelten Inertialsensorsysteme 10 bzw. deren Steuerprozessoren 12a untereinander und mit dem zentralen Steuerprozessor 12b des systemübergreifenden Steuersystems 21 kommunizieren und Daten austauschen können. Der zentrale Steuerprozessor 12b kann ebenfalls über einen internen Speicher verfügen. Es kann auch möglich sein, dass ein separater (in Fig. 2 nicht explizit gezeigter) Speicherbaustein auf der Platine 18b des systemübergreifenden Steuersystems 21 vorgesehen wird, der mit dem zentralen Steuerprozessor 12b gekoppelt ist, und von dem der zentrale Steuerprozessor 12b gespeicherte Daten zur Verarbeitung abrufen kann.

Der zentrale Steuerprozessor 12b kann die Ausgabedaten der zentralen Steuerprozessoren 12a aller Inertialsensorsysteme 10 empfangen und durch geeignete Plausibilisierungsmaßnahmen miteinander kombinieren. Beispielsweise können die einzelnen Inertialsensorsysteme 10 redundante Daten liefern, die die Ausfallsicherheit des Inertialsensorsystems 20 im Gesamten verringern. Durch Bestücken der einzelnen Inertialsensorsysteme 10 mit Inertialsensoren unterschiedlicher Messeigenschaften kann die Wahrscheinlichkeit des Auftretens identischer und damit schwer erkennbarer Fehler minimiert werden. In dem zentralen Steuerprozessor 12b kann eine "lock step"-Funktionalität implementiert werden, das heißt eine Ausgabe eines gesamten Sensorausgabewertes durch den zentralen Steuerprozessor 12b wird erst veranlasst, wenn die zentralen Steuerprozessoren 12a der einzelnen Inertialsensorsysteme 10 als fehlerfrei abgeglichene Ausgabedaten pro Messperiode ausgegeben haben. Damit kann eine duale modulare Redundanz erreicht werden, bei der das gesamte System 20 eine höhere Fehlertoleranz aufweisen kann. Zur Implementierung einer "lock step"-Funktionalität kann der zentrale Steuerprozessor 12b zwei Rechenkerne enthalten, die parallel die gleichen Befehle abarbeiten können und deren Ergebnisse dann gegenseitig bzw. kreuzkorreliert geprüft werden.

Der zentrale Steuerprozessor 12b kann ferner dazu ausgelegt werden, eine eingebaute Selbsttestroutine ("built-in selftest", BIST) zu initiieren, um Messergebnisse von Inertialsensoren durch redundant vorhandene weitere Inertialsensoren zu plausibilisieren und gegebenenfalls ein Fehlverhalten zu erkennen und zu korrigieren.

Der modulare Aufbau des Inertialsensorsystems 20 ermöglicht skalierbare Aufbauten mit mehreren Basismodulen aus Inertialsensorsystemen 10, die über das systemübergreifende Steuersystem 21 zusammengekoppelt werden. Je nach Anzahl der Basismodule sind verschiedene Leistungsparameter möglich und die Konfiguration des Gesamtsystems lässt sich flexibel an jeweils erforderliche Sicherheitsanforderungen anpassen. Beispielsweise kann bereits mit drei Basismodulen dem Auftreten byzantinischer Fehler vorgebeugt werden: Durch Majoritätsentscheid kann ein singulärer Fehler auf einem der Module inklusive des Steuersystems 21 zuverlässig erkannt werden. Bei einem Einsatz von mehr als drei Basismodulen steigt dementsprechend die Wahrscheinlichkeit, einen Fehler als solchen sicher erkennen zu können.

Fig. 4 zeigt ein schematisches Blockschaubild eines Inertialsensorsystems 20, welches zwei Basismodule 1 und 2 sowie ein mit beiden Basismodulen gekoppeltes Steuersystem 21 aufweist. Die Energieversorgung 11 der Basismodule versorgt alle Inertialsensoren 15a, 15b, 15c, 15d, 16a, 16b, 16c und 16d mit elektrischer Energie, ebenso wie den zentralen Steuerprozessor 12a. Über systemverbindende Systemschnittstellen 13 werden die Sensormesswerte der einzelnen Inertialsensoren mittels des zentralen Steuerprozessors 12a der einzelnen Basismodule auf dem Steuersystem 21 zusammengeführt, wo der zentrale Steuerprozessor 12b des Steuersystems 21 eine Kombination und Evaluierung der eingehenden Sensormesswerte gemäß vorgebbarer Algorithmen vornimmt.

Das in den Fig. 2 und 4 dargestellte modulare Inertialsensorsystem 20 kann beispielsweise in einem Flugkörper 40 Einsatz finden, welches beispielhaft in Fig. 6 dargestellt wird. Das Inertialsensorsystem 20 kann beispielsweise Teil eines Trägheitsnavigationssystems (INS) sein, welches zum Beispiel für den Einsatz in einem Flugkörper konzipiert ist. Ein derartiger Flugkörper 40, welcher ein Inertialsensorsystem 20 (oder Inertialsensorsystem IMU) aufweisen kann, ist beispielhaft in Fig. 6 dargestellt. Dabei kann das Inertialsensorsystem 20 insbesondere als Strapdown-Inertialsensorsystem ausgebildet werden, das heißt, ein IMU, bei dem die Inertialsensoren des Inertialsensorsystems 20 fest mit dem äußeren Rahmen des Flugkörpers 40 verbunden sind. Insbesondere die Beschleunigungssensoren solcher Strapdown-Inertialsensorsysteme weisen dabei auch einen der Rotationsbewegung des Flugkörpers 40 zuzuschreibenden Sensormesswertanteil auf, welcher zur Bestimmung der translatorischen Beschleunigungswerte mithilfe von Sensorsignalwerte der Drehratensensoren kompensiert werden kann.

Der funktionale Ablauf einer Inertialsensormessung mithilfe des Inertialsensorsystems 20 wird in den Fig. 7 und 8 näher erläutert. Dabei stellt Fig. 7 den Verfahrensablauf eines Verfahrens zur Kombination von Inertialsensormesswerten in dem Steuersystem 21 dar, nachdem alle Rohdaten der Sensoren der Basismodule erfasst worden sind. Die Verarbeitung der Sensorendaten in den einzelnen Basismodulen, die der Verarbeitung gemäß dem Verfahren der Fig. 7 vorausgeht, wird in höherer Detailtiefe im Zusammenhang mit dem Flussdiagramm der Fig. 8 erläutert.

Nach einer (nicht explizit dargestellten) Initialisierungsphase aller Basismodule sowie des systemübergreifenden Steuersystems erfolgt in den Schritten M(x) mit x =1, ..., n zunächst eine Vorverarbeitung der Sensormesswerte innerhalb eines Basismoduls 1 bzw. 2 durch den jeweiligen zentralen Steuerprozessor 12a. Dabei werden in Schritt M1 zunächst alle Sensorrohdaten erfasst und in Schritt M2 mit Kalibrationsdaten kompensiert. In Schritt M3 werden, falls nicht hier schon Messbereichsüberschreitungen festgestellt worden sind, Messwerte gleichartiger Inertialsensoren miteinander verglichen und als plausibel eingestuft, falls eine vorgegebene Fehlerschwelle bei der Abweichung nicht überschritten wird. In Schritt M4 werden dann die plausibilisierten Inertialsensormesswerte von Sensoren gleichen Sensortyps optional fusioniert und in Schritt M5 als Basismodulausgabe durch den zentralen Steuerprozessor 12a über die Systemschnittstellen 13 ausgegeben. Dies erfolgt für jedes der Basismodule 1, 2 separat.

Im Steuersystem 21 werden nach der Vorverarbeitung M(x) in einem Schritt S1 alle Basismodulausgaben gegebenenfalls Fehlermeldungen der Basismodule empfangen und verarbeitet. Dieser Schritt S1 kann im Lockstep-Modus erfolgen, um alle Basismodule synchronisiert zu halten. Falls hinreichend viele gültige Basismodulausgaben erhalten worden sind, können in Schritt S2 Abweichungen der einzelnen Basismodulausgaben voneinander detektiert werden. Dabei können parallele Abgleiche von Sensordaten, die dem gleichen Inertialsensortyp zuzuordnen sind, erfolgen, so dass bei einem Unterschreiten von vorgegebenen Maximalabweichungstoleranzen in Schritt S3 alle Basismodulausgaben sensortypabhängig fusioniert werden können und in Schritt S4 als Gesamtausgabe des Inertialsensorsystems 20 nach außen bereitgestellt werden können. Gegebenenfalls können vor der Fusionierung bei Auftreten von behebbaren Fehlern Maßnahmen zur Fehlerkorrektur eingeleitet werden bzw. bei einem Auftreten von nicht behebbaren Fehlern entsprechende Fehlermeldung nach außen generiert werden.

Fig. 3 zeigt ein Inertialsensorsystem IMU für den Einsatz in einem Trägheitsnavigationssystem eines Flugkörpers, wie beispielsweise dem in Fig. 5 dargestellten Flugkörper 30. Das Inertialsensorsystem IMU ist prinzipiell ähnlich dem Inertialsensorsystem 10 der Fig. 1 aufgebaut und setzt im Wesentlichen die Funktionalität der Bildung virtueller Sensorgruppensätze um. Dazu besitzt das Inertialsensorsystem 10 mindestens zwei Inertialsensormodule B1, B2, ..., Bm, welche jeweils Inertialsensoren des gleichen Inertialsensortyps aufweisen. Beispielsweise umfasst ein erstes Inertialsensormodul B1 mindestens zwei erste Inertialsensoren C1, ..., Ci eines ersten Inertialsensortyps und ein zweites Inertialsensormodul B2 mindestens zwei zweite Inertialsensoren D1, ..., Dj eines zweiten, von den erstem Inertialsensortyp verschiedenen Inertialsensortyps.

Beispielsweise können die ersten Inertialsensoren C1, ..., Ci Beschleunigungssensoren und die zweiten Inertialsensoren D1, ..., Dj Drehratensensoren sein. Ein beispielhaft dargestelltes drittes Inertialsensormodul Bm kann mindestens zwei dritte Inertialsensoren E1, ..., Ek eines dritten, von den beiden ersten Inertialsensortypen verschiedenen Inertialsensortyps aufweisen. Es sollte klar sein, dass die Variablen i, j, k und m verschiedene Werte von zwei oder mehr als zwei annehmen können und dass das gezeigte Beispiel der Fig. 3 mit je drei Sensormodulen und je drei Sensoren nur beispielhafter Natur ist. Insbesondere ist es für das Inertialsensorsystem IMU nur wesentlich, dass eines der Inertialsensormodule B1, B2, ..., Bm mehr als einen Inertialsensor aufweist, um zumindest in einem der Inertialsensormodule B1, B2, ..., Bm eine Auswahl aus Inertialsensoren je nach Betriebsbedingungen zu ermöglichen. Die jeweils anderen Inertialsensormodule B1, B2, ..., Bm können unter Umständen nur einen einzigen Inertialsensor aufweisen. Beispielsweise kann das Inertialsensormodul B1 zwei Inertialsensoren C1, C2 aufweisen, aus denen eine Auswahl eines jeweils aktiven Inertialsensors getroffen werden kann, während andere der Inertialsensormodule B2, ..., Bm jeweils nur einen einzigen Inertialsensor D1 bzw. E1 aufweisen. Unter diesen Umständen kann in den Inertialsensormodulen mit nur einem einzigen Inertialsensor auf den Multiplexer MUX2, ... MUXm verzichtet werden und der Ausgang des einzigen Inertialsensors jeweils direkt mit dem Steuerprozessor P gekoppelt werden.

Die Inertialsensoren eines jeweiligen Inertialsensormoduls weisen zwar den gleichen Sensortyp auf, weisen aber unterschiedliche Messeigenschaften auf. So können beispielsweise primäre Sensoren mit hoher Messgenauigkeit, aber großem Bauvolumen und/oder teurem Aufbau neben sekundären Sensoren mit geringer Messgenauigkeit, aber geringem Bauvolumen und/oder kostengünstigem Aufbau eingesetzt werden. Die Idee hinter dem Einsatz von mehreren unterschiedlichen Sensoren pro Sensortyp besteht darin, dass ein Einsatz eines Flugkörpers typischerweise in verschiedene Flugphasen mit stark unterschiedlichen Anforderungsprofilen eingeteilt werden können. Beispielsweise ist eine Abschussphase eine Phase hoher Beschleunigung und niedriger Drehrate. In einer derartigen Phase ist eine hohe Bandbreite bei Beschleunigungssensoren gefordert, während die Drehratensensoren zwar hoch vibrationsfest und beschleunigungsunabhängig messen sollen, deren Verzerrungseffekte aber aufgrund der kurzen Dauer der Abschussphase nur eine untergeordnete Rolle spielen. Demgegenüber ist eine auf die Abschussphase folgende Freiflugphase eine deutlich länger andauernde Phase, in der die Beschleunigungssensoren zwar eine geringere Bandbreite benötigen, aber dafür nur sehr geringe Verzerrungseffekte aufweisen sollten.

Ein zentraler Steuerprozessor P kann nun je nach Flugphase aus jedem der Inertialsensormodule B1, ..., Bm einen oder eine Untergruppe der in jedem Modul verfügbaren Inertialsensoren als die aktiven Inertialsensoren auswählen. Diese Auswahl hat den Vorteil, dass immer diejenigen Inertialsensoren mit den für die jeweilige Flugphase geeignetsten Leistungsparametern die tatsächlichen Messwerte liefern und damit die flugphasenabhängigen dominanten Fehlerterme optimal minimiert werden können. Diese Art der Adaption kann für unterschiedliche Leistungsparameter angewendet werden: Bandbreite, Vibrationsfestigkeit, Beschleunigungsfestigkeit, Messgenauigkeit, Temperaturabhängigkeit, Driftwert ("bias"), Langzeitstabilitätswert, oder Skalenfaktorfehlerwert bzw. Skalenfaktornichtlinearität. Damit ergeben sich pro Flugphase immer "virtuelle" Sensorsysteme aus Untergruppen von ausgewählten aktiven Inertialsensoren, die mit einem eigenen Satz an Kompensationsparametern angesteuert werden können.

Der zentrale Steuerprozessor P kann die Flugphase beispielsweise gemäß einer vorab vorgegebenen zeitlichen Sequenz bestimmen oder die Messdaten den Inertialsensoren selbst als Entscheidungsbasis heranziehen. Es kann auch möglich sein, dem zentralen Steuerprozessor P die jeweils aktuelle Flugphase durch eine externe Quelle über eine mit dem Steuerprozessor P gekoppelte Datenschnittstelle I/O anzugeben. Das Inertialsensorsystem IMU kann zudem eine Energieversorgungskomponente SV aufweisen, die die jeweiligen Inertialsensormodule bzw. deren Inertialsensoren mit elektrischer Energie versorgt. Die Energieversorgungskomponente SV kann ferner auch den zentralen Steuerprozessor P mit elektrischer Energie zu dessen Betrieb versorgen.

Das Inertialsensorsystem IMU kann über einen Speicher MEM verfügen, in dem Konfigurationsdatensätze zur Fehlerkompensation jedes der ersten und zweiten Inertialsensoren gespeichert sind. Der Steuerprozessor P kann die Auswahl der jeweils aktiven Inertialsensoren dann in in Abhängigkeit von den in dem Speicher MEM gespeicherten, diese Kombination beschreibenden Konfigurationsdatensätzen vornehmen.

Die Auswahl der jeweils aktiven Inertialsensoren durch den Steuerprozessor P erfolgt über Mutliplexer MUX1, MUX2, ..., MUXm, die jeweils mit den Ausgängen der Inertialsensoren gekoppelt sind. Die Multiplexer MUX1, MUX2, ..., MUXm werden durch den Steuerprozessor P über Auswahlsignale Seil, Sel2, ..., Selm angesteuert, um die jeweiligen Multiplexer MUX1, MUX2, ..., MUXm zur Ausgabe der Sensormesswerte O1, O2, ..., Om der jeweils ausgewählten Inertialsensoren zu veranlassen. Die Sensormesswerte O1, O2, ..., Om können dann an den Steuerprozessor P zur Weiterverarbeitung abgegeben werden.

Ein Verfahren zur flugphasenabhängigen Inertialsensormessung während des Fluges eines Flugkörpers, welches mit einem Inertialsensorsystem IMU der Fig. 3 durchgeführt werden kann, umfasst zunächst ein Bestimmen einer momentanen Flugphase des Flugkörpers. Je nach bestimmter Flugphase kann ein erster aktiver Inertialsensor von mindestens zwei ersten Inertialsensoren C1, ..., Ci eines ersten Inertialsensortyps in Abhängigkeit von der bestimmten Flugphase ausgewählt werden, beispielsweise ein Beschleunigungssensor. Gleichermaßen kann optional ein zweiter aktiver Inertialsensor von mindestens zwei zweiten Inertialsensoren D1, ..., Dj eines zweiten, von den erstem Inertialsensortyp verschiedenen Inertialsensortyps in Abhängigkeit von der bestimmten Flugphase ausgewählt werden, beispielsweise ein Drehratensensor. Die Sensormesswerte des einen aktiven Inertialsensors (bzw. optional der beiden aktiven Inertialsensoren) können dann in einem Steuerprozessor P pro Flugphase verarbeitet werden, beispielsweise indem der Steuerprozessor P die erfassten Beschleunigungssensormesswerte und Drehratensensormesswerte zur Berechnung der momentane Fluglage des Flugkörpers in einem Flugführungssystem weitergibt.

Die Fehlerparameter der zwei aktiven Inertialsensoren können dabei in Abhängigkeit von in einem mit dem Steuerprozessor P gekoppelten Speicher MEM gespeicherten diese Kombination beschreibenden Konfigurationsdatensätzen kompensiert werden.

Während des Fluges des Flugkörpers kann der Steuerprozessor P natürlich überwachen, ob der Flugkörper in eine nächste Flugphase eintritt. Wenn das der Fall ist, können neue erste und zweite aktive Inertialsensoren in Abhängigkeit von der Flugphase, in die der Flugkörper aktuell gerade eingetreten ist, ausgewählt werden. Der Steuerprozessor P verwendet dann die Sensormesswerte der zwei neuen aktiven Inertialsensoren zur Weiterverarbeitung.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

## Patentansprüche

1. Inertialsensorsystem (IMU) für den Einsatz in einem Trägheitsnavigationssystem eines Flugkörpers (30), umfassend:
ein erstes Inertialsensormodul (B1) mit mindestens zwei ersten Inertialsensoren (C1, ..., Ci) eines ersten Inertialsensortyps, welche unterschiedliche Messeigenschaften aufweisen, und einem mit den Ausgängen der ersten Inertialsensoren (C1, ..., Ci) gekoppelten ersten Multiplexer (MUX1), wobei der erste Inertialsensortyp
Beschleunigungssensoren umfasst;
ein zweites Inertialsensormodul (B2) mit mindestens zwei zweiten Inertialsensor (D1, ..., Dj) eines zweiten, von dem ersten Inertialsensortyp
verschiedenen Inertialsensortyps, welche unterschiedliche Messeigenschaften aufweisen, und einem zweiten, mit den Ausgängen der
zweiten Inertialsensoren (D1, ..., Dj) gekoppelten Multiplexer (MUX2), wobei der zweite Inertialsensortyp Drehratensensoren umfasst; und
einen Steuerprozessor (P), welcher mit dem ersten Multiplexer (MUX1) und
dem zweiten Multiplexer (MUX2) gekoppelt und dazu ausgelegt ist,
- eine momentane Flugphase des Flugkörpers (30) zu bestimmen,
- den ersten Multiplexer (MUX1) zur Ausgabe der Sensormesswerte eines durch den Steuerprozessor (P) ausgewählten Inertialsensors der ersten Inertialsensoren (C1, ..., Ci) anzusteuern und einen Inertialsensor der ersten Inertialsensoren (C1, ..., Ci) und einen Inertialsensor der zweiten Inertialsensoren (D1, ..., Dj) in Abhängigkeit von der momentanen Flugphase des Flugkörpers (30) auszuwählen,
- den zweiten Multiplexer (MUX2) zur Ausgabe der Sensormesswerte eines durch den Steuerprozessor (P) ausgewählten Inertialsensors der zweiten Inertialsensoren (D1, ..., Dj) anzusteuern und
- erfasste Beschleunigungssensormesswerte und Drehratensensormesswerte zur Berechnung einer momentanen Fluglage des Flugkörpers in einem Flugführungssystem weiterzugeben.

2. Inertialsensorsystem (IMU) gemäß Anspruch 1, weiterhin mit:
einem mit dem Steuerprozessor (P) gekoppelten Speicher (MEM), in welchem Konfigurationsdatensätze zur Fehlerkompensation jedes der ersten und zweiten Inertialsensoren gespeichert sind.

3. Inertialsensorsystem (IMU) gemäß Anspruch 2, wobei der Steuerprozessor (P) weiterhin dazu ausgelegt ist, einen Inertialsensor der ersten Inertialsensoren (C1, ..., Ci) und einen Inertialsensor der zweiten Inertialsensoren (D1, ..., Dj) in Abhängigkeit von den in dem Speicher (MEM) gespeicherten Konfigurationsdatensätzen auszuwählen.

4. Inertialsensorsystem (IMU) gemäß einem der Ansprüche 1 bis 3, wobei der Steuerprozessor (P) die momentane Flugphase des Flugkörpers (30) auf der Basis von momentanen Sensormesswerten mindestens eines Inertialsensors der ersten und zweiten Inertialsensoren (C1, ..., Ci; D1, ..., Dj) bestimmt.

5. Inertialsensorsystem (IMU) gemäß einem der Ansprüche 1 bis 3, wobei der Steuerprozessor (P) die momentane Flugphase des Flugkörpers (30) gemäß einer vorbestimmten zeitlichen Sequenz bestimmt.

6. Inertialsensorsystem (IMU) gemäß einem der Ansprüche 1 bis 3, wobei der Steuerprozessor (P) die momentane Flugphase des Flugkörpers (30) durch eine externe Quelle über eine mit dem Steuerprozessor (P) gekoppelte Datenschnittstelle (I/O) erhält.

7. Flugkörper (30) mit einem Inertialsensorsystem (IMU) gemäß einem der voranstehenden Ansprüche.

8. Verfahren zur flugphasenabhängigen Inertialsensormessung während des Fluges eines Flugkörpers, mit den Schritten:
Bestimmen einer momentanen Flugphase des Flugkörpers (30) mittels eines Steuerprozessors (P);
Auswählen eines ersten aktiven Inertialsensors von mindestens zwei ersten Inertialsensoren (C1, ..., Ci) eines ersten Inertialsensortyps eines ersten Inertialsensormoduls (B1) in Abhängigkeit von der bestimmten Flugphase,
wobei das erste Inertialsensormodul (B1) mindestens zwei erste Inertialsensoren (C1, ..., Ci) eines ersten Inertialsensortyps, welche unterschiedliche Messeigenschaften aufweisen, umfasst, und wobei der erste Inertialsensortyp Beschleunigungssensoren umfasst;
Verarbeiten der Sensormesswerte des ersten aktiven Inertialsensors (C1, ..., Ci) in dem Steuerprozessor (P), welcher einen mit den Ausgängen der ersten Inertialsensoren (C1, ..., Ci) gekoppelten ersten Multiplexer (MUX1) zur Ausgabe der Sensormesswerte des ausgewählten Inertialsensors der ersten Inertialsensoren (C1, ..., Ci) ansteuert,
Auswählen eines zweiten aktiven Inertialsensors von mindestens zwei zweiten Inertialsensoren (D1, ..., Dj) eines zweiten, von den erstem Inertialsensortyp
verschiedenen Inertialsensortyps eines zweiten Inertialsensormoduls (B2), welche unterschiedliche Messeigenschaften aufweisen, in
Abhängigkeit von der bestimmten Flugphase, wobei der zweite Inertialsensortyp Drehratensensoren umfasst; und
Verarbeiten der Sensormesswerte des zweiten aktiven Inertialsensors (D1, ...
Dj) in dem Steuerprozessor (P), welcher einen mit den Ausgängen der zweiten Inertialsensoren (D1, ..., Dj) gekoppelten zweiten Multiplexer (MUX2) zur Ausgabe der Sensormesswerte des ausgewählten Inertialsensors der zweiten Inertialsensoren (D1, ..., Dj) ansteuert;
wobei der Steuerprozessor (P) erfasste Beschleunigungssensormesswerte und Drehratensensormesswerte zur Berechnung einer momentanen Fluglage des Flugkörpers in einem Flugführungssystem weitergibt.

9. Verfahren gemäß Anspruch 8, wobei das Verarbeiten der Sensormesswerte ein Berechnen der momentanen Fluglage des Flugkörpers (30) auf der Basis von Beschleunigungssensormesswerten und Drehratensensormesswerten umfasst.

10. Verfahren gemäß einem der Ansprüche 8 und 9, weiterhin mit dem Schritt:
Kompensieren von Fehlerparametern der aktiven Inertialsensoren in Abhängigkeit von in einem mit dem Steuerprozessor (P) gekoppelten Speicher (MEM) gespeicherten Konfigurationsdatensätzen für jeden der ersten und zweiten Inertialsensoren (C1, ..., Ci; D1, ..., Dj).

11. Verfahren gemäß einem der Ansprüche 8 bis 10, weiterhin mit den Schritten:
Bestimmen, durch den Steuerprozessor (P), ob der Flugkörper (30) in eine nächste Flugphase eintritt;
Auswählen eines neuen ersten aktiven Inertialsensors von mindestens zwei ersten Inertialsensoren (C1, ..., Ci) eines ersten Inertialsensortyps in Abhängigkeit von der nächsten Flugphase;
Auswählen eines neuen zweiten aktiven Inertialsensors von mindestens zwei zweiten Inertialsensoren (D1, ..., Dj) eines zweiten, von den erstem Inertialsensortyp verschiedenen Inertialsensortyps in Abhängigkeit von der nächsten Flugphase; und
Verarbeiten der Sensormesswerte der zwei neuen aktiven Inertialsensoren in dem Steuerprozessor (P).

## Claims

1. Inertial sensor system (IMU) for use in an inertial navigation system of a missile (30), comprising:
a first inertial sensor module (B1) having at least two first inertial sensors (C1, ..., Ci) of a first inertial sensor type, and said first inertial sensors comprise different measuring properties, and said first inertial sensor module having a first multiplexer (MUX1) that is coupled to the outputs of the first inertial sensors (C1, ..., Ci), wherein the first inertial sensor type comprises acceleration sensors;
a second inertial sensor module (B2) having at least two second inertial sensors (D1, ..., Dj) of a second inertial sensor type that is different from the first inertial sensor type, and said second inertial sensors comprise different measuring properties, and said second inertial sensor module having a second multiplexer (MUX2) that is coupled to the outputs of the second inertial sensors (D1, ..., Dj), wherein
the second inertial sensor type comprises rotational speed sensors; and
a control processor (P) that is coupled to the first multiplexer (MUX1) and the second multiplexer (MUX2) and is configured so as
- to determine a current flight phase of the missile (30),
- to control the first multiplexer (MUX1) so as to output the sensor measured values of an inertial sensor of the first inertial sensors (C1, ...Ci), and said first inertial sensor is selected by means of the control processor (P), and so as to select an inertial sensor of the second inertial sensors (D1, ..., Dj) in dependence upon the current flight phase of the missile (30),
- to control the second multiplexer (MUX2) so as to output the sensor measured values of an inertial sensor of the second inertial sensors (D1, ..., Dj), and said second inertial sensor is selected by means of the control processor (P), and
- to relay detected acceleration sensor measured values and rotational speed sensor measured values so as to calculate a current flight position of the missile in a flight guidance system.

2. Inertial sensor system (IMU) in accordance with claim 1, furthermore having:
a storage device (MEM) that is coupled to the control processor (P) and configuration data sets for the error compensation of each of the first and second inertial sensors are stored in said storage device.

3. Inertial sensor system (IMU) in accordance with claim 2, wherein the control processor (P) is furthermore configured so as to select an inertial sensor of the first inertial sensors (C1, ..., Ci) and an inertial sensor of the second inertial sensors (D1, ..., Dj) in dependence upon the configuration data sets that are stored in the storage device (MEM).

4. Inertial sensor system (IMU) in accordance with one of claims 1 to 3, wherein the control processor (P) determines the current flight phase of the missile (30) on the basis of current sensor measured values at least of one inertial sensor of the first and second inertial sensors (C1, ..., Ci; D1, ..., Dj) .

5. Inertial sensor system (IMU) in accordance with one of claims 1 to 3, wherein the control processor (P) determines the current flight phase of the missile (30) in accordance with a predetermined temporal sequence.

6. Inertial sensor system (IMU) in accordance with one of claims 1 to 3, wherein the control processor (P) obtains the current flight phase of the missile (30) by means of an external source via a data interface (I/O) that is coupled to the control processor (P).

7. Missile (30) having an inertial sensor system (IMU) in accordance with one of the preceding claims.

8. Method for the flight phase-dependent inertial sensor measurement during the flight of a missile, said method having the steps:
determining a current flight phase of the missile (30) by means of a control processor (P);
selecting a first active inertial sensor from at least two first inertial sensors (C1, ..., Ci) of a first inertial sensor type of a first inertial sensor module (B1) in dependence upon the determined flight phase, wherein the first inertial sensor module (B1) comprises at least two first inertial sensors (C1, ..., Ci) of a first inertial sensor type and said first inertial sensors comprise different measuring properties, and wherein the first inertial sensor type comprises acceleration sensors;
processing the sensor measured values of the first active inertial sensor (C1, ..., Ci) in the control processor (P) that controls a first multiplexer (MUX1) that is coupled to the outputs of the first inertial sensors (C1, ..., Ci) so as to output the sensor measured values of the selected inertial sensor of the first inertial sensors (C1, ..., Ci),
selecting a second active inertial sensor from at least two second inertial sensors (D1, ..., Dj) of a second inertial sensor type of a second inertial sensor module (B2), and said second inertial sensor type is different from the first inertial sensor type and said at least two second inertial sensors comprise different measuring properties, in dependence upon the determined flight phase, wherein the second inertial sensor type comprises rotational speed sensors; and
processing the sensor measured values of the second active inertial sensor (D1, ..., Dj) in the control processor (P) that controls a second multiplexer (MUX2) that is coupled to the outputs of the second inertial sensors (D1, ..., Dj) so as to output the sensor measured values of the selected inertial sensor of the second inertial sensors (D1, ..., Dj);
wherein the control processor (P) relays detected acceleration sensor measured values and rotational speed sensor measured values so as to calculate a current flight position of the missile in a flight guidance system.

9. Method in accordance with claim 8,
wherein the processing of the sensor measured values comprises a calculation of the current flight position of the missile (30) on the basis of acceleration sensor measured values and rotational speed measured values.

10. Method in accordance with one of claims 8 and 9, furthermore having the step:
compensating error parameters of the active inertial sensors in dependence upon configuration data sets for each of the first and second inertial sensors (C1, ..., Ci; D1, ..., Dj) and
said configuration data sets are stored in a storage device (MEM) that is coupled to the control processor (P).

11. Method in accordance with one of claims 8 to 10, furthermore comprising the steps:
determining by means of the control processor (P) whether the missile (30) enters into a next flight phase;
selecting a new first active inertial sensor from at least two first inertial sensors (C1, ..., Ci) of a first inertial sensor type in dependence upon the next flight phase;
selecting a new second active inertial sensor from at least two second inertial sensors (D1, ..., Dj) of a second inertial sensor type, which is different from the first inertial sensor type, in dependence upon the next flight phase; and
processing the sensor measured values of the two new active inertial sensors in the control processor (P).

## Revendications

1. Unité de mesure inertielle (IMU) destinée à être utilisée dans un système de navigation inertielle d'un missile (30), comprenant :
un premier module de capteurs inertiels (B1) comportant au moins deux premiers capteurs inertiels (C1, ..., Ci) d'un premier type de capteur inertiel qui présentent des caractéristiques de mesure différentes, et un premier multiplexeur (MUX1) couplé aux sorties des premiers capteurs inertiels (C1, ..., Ci), le premier type de capteur inertiel comprenant des capteurs d'accélération ;
un second module de capteurs inertiels (B2) comportant au moins deux seconds capteurs inertiels (D1, ..., Dj) d'un second type de capteur inertiel, différent du premier type de capteur inertiel, qui présentent des caractéristiques de mesure différentes, et un second multiplexeur (MUX2) couplé aux sorties des seconds capteurs inertiels (D1, ..., Dj), le second type de capteur inertiel comprenant des capteurs de vitesse angulaire ; et
un processeur de commande (P) qui est couplé au premier multiplexeur (MUX1) et au second multiplexeur (MUX2) et qui est conçu pour :
- déterminer une phase de vol instantanée du missile (30),
- commander le premier multiplexeur (MUX1) pour fournir les mesures de capteur d'un capteur inertiel sélectionné par le processeur de commande (P) parmi les premiers capteurs inertiels (C1, ..., Ci) et sélectionner un capteur inertiel parmi les premiers capteurs inertiels (C1, ..., Ci) et un capteur inertiel parmi les seconds capteurs inertiels (D1, ..., Dj) en fonction de la phase de vol instantanée du missile (30),
- commander le second multiplexeur (MUX2) pour fournir les mesures de capteur d'un capteur inertiel sélectionné par le processeur de commande (P) parmi les seconds capteurs inertiels (D1, ..., Dj), et
- transmettre les mesures de capteur d'accélération et les mesures de capteur de vitesse angulaire détectées pour le calcul d'une attitude instantanée du missile dans un système de guidage de vol.

2. Unité de mesure inertielle (IMU) selon la revendication 1, comprenant en outre :
une mémoire (MEM) couplée au processeur de commande (P), dans laquelle des ensembles de données de configuration pour la compensation d'erreur de chacun des premiers et seconds capteurs inertiels sont stockés.

3. Unité de mesure inertielle (IMU) selon la revendication 2, dans laquelle le processeur de commande (P) est en outre conçu pour sélectionner un capteur inertiel parmi les premiers capteurs inertiels (C1, ..., Ci) et un capteur inertiel parmi les seconds capteurs inertiels (D1, ..., Dj) en fonction des ensembles de données de configuration stockés dans la mémoire (MEM).

4. Unité de mesure inertielle (IMU) selon l'une des revendications 1 à 3, dans laquelle le processeur de commande (P) détermine la phase de vol instantanée du missile (30) sur la base de mesures de capteur instantanées d'au moins un capteur inertiel parmi les premiers et seconds capteurs inertiels (C1, ..., Ci ; D1, ..., Dj).

5. Unité de mesure inertielle (IMU) selon l'une des revendications 1 à 3, dans laquelle le processeur de commande (P) détermine la phase de vol instantanée du missile (30) selon une séquence temporelle prédéterminée.

6. Unité de mesure inertielle (IMU) selon l'une des revendications 1 à 3, dans laquelle le processeur de commande (P) obtient la phase de vol instantanée du missile (30) d'une source externe via une interface de données (I/O) couplée au processeur de commande (P).

7. Missile (30) comportant une unité de mesure inertielle (IMU) selon l'une des revendications précédentes.

8. Procédé de mesure par capteurs inertiels en fonction de la phase de vol pendant le vol d'un missile, comprenant les étapes consistant à :
déterminer une phase de vol instantanée du missile (30) au moyen d'un processeur de commande (P) ;
sélectionner un premier capteur inertiel actif parmi au moins deux premiers capteurs inertiels (C1, ..., Ci) d'un premier type de capteur inertiel d'un premier module de capteurs inertiels (B1) en fonction de la phase de vol déterminée, le premier module de capteurs inertiels (B1) comprenant au moins deux premiers capteurs inertiels (C1, ..., Ci) d'un premier type de capteur inertiel qui présentent des caractéristiques de mesure différentes, et le premier type de capteur inertiel comprenant des capteurs d'accélération ;
traiter les mesures de capteur du premier capteur inertiel actif (C1, ..., Ci) dans le processeur de commande (P) qui commande un premier multiplexeur (MUX1) couplé aux sorties des premiers capteurs inertiels (C1, ..., Ci) pour fournir les mesures de capteur du capteur inertiel sélectionné parmi les premiers capteurs inertiels (C1, ..., Ci),
sélectionner un second capteur inertiel actif parmi au moins deux seconds capteurs inertiels (D1, ..., Dj) d'un second type de capteur inertiel, différent du premier type de capteur inertiel, d'un second module de capteurs inertiels (B2) qui présentent des caractéristiques de mesure différentes en fonction de la phase de vol déterminée, le second type de capteur inertiel comprenant des capteurs de vitesse angulaire ; et
traiter les mesures de capteur du second capteur inertiel actif (D1, ..., Dj) dans le processeur de commande (P) qui commande un second multiplexeur (MUX2) couplé aux sorties des seconds capteurs inertiels (D1, ..., Dj) pour fournir les mesures de capteur du capteur inertiel sélectionné parmi les seconds capteurs inertiels (D1, ..., Dj) ;
dans lequel le processeur de commande (P) transmet les mesures de capteur d'accélération et les mesures de capteur de vitesse angulaire détectées pour calculer une attitude instantanée du missile dans un système de commande de vol.

9. Procédé selon la revendication 8, dans lequel le traitement des mesures de capteur comprend un calcul de l'attitude instantanée du missile (30) sur la base de mesures de capteur d'accélération et de mesures de capteur de vitesse angulaire.

10. Procédé selon l'une des revendications 8 et 9, comprenant en outre l'étape consistant à :
compenser les paramètres d'erreur des capteurs inertiels actifs en fonction d'ensembles de données de configuration stockés dans une mémoire (MEM) couplée au processeur de commande (P) pour chacun des premiers et seconds capteurs inertiels (C1,..., Ci ; D1,..., Dj).

11. Procédé selon l'une des revendications 8 à 10, comprenant en outre les étapes consistant à :
déterminer, par le processeur de commande (P), si le missile (30) entre dans une phase de vol suivante ;
sélectionner un nouveau premier capteur inertiel actif parmi au moins deux premiers capteurs inertiels (C1, ..., Ci) d'un premier type de capteur inertiel en fonction de la phase de vol suivante ;
sélectionner un nouveau second capteur inertiel actif parmi au moins deux seconds capteurs inertiels (D1, ..., Dj) d'un second type de capteur inertiel, différent du premier type de capteur inertiel, en fonction de la phase de vol suivante ; et
traiter les mesures de capteur des deux nouveaux capteurs inertiels actifs dans le processeur de commande (P).
